# EUROPÄISCHE PATENTANMELDUNG

(11) **EP 1 677 036 A1**
(43) Veröffentlichungstag der Anmeldung: **05.07.2006**
(21) Anmeldenummer: 05028173.2
(22) Anmeldetag: 22.12.2005
(51) Int. Cl.: F16K 27/04

(54) **Kartuschenboden**

(30) Priorität: 04.01.2005 DE 102005001309
(71) Anmelder: Hansgrohe AG, 77761 Schiltach (DE)
(72) Erfinder: Ginter, Andreas, 78713 Schramberg-Heiligenbronn (DE)
(74) Vertreter: Ruff, Michael

(57) **Zusammenfassung**

Um eine Kartusche für unterschiedliche Dichtsysteme verwendbar zu machen, wird ein Kartuschenboden (5) vorgeschlagen, in dessen dem Durchgang von Wasser in das in der Kartusche enthaltene Ventilsystem dienender Öffnung eine Hülse (8) eingesteckt werden kann. Die Hülse (8) ragt über die dem Armaturengehäuse (1) zugewandte Endfläche des Kartuschenbodens (5) hinaus in das Armaturengehäuse (1) hinein. Zwischen der radialen Außenseite und einer Ausnehmung des Armaturengehäuses kann eine Dichtung (11) eingelegt werden. Der Kartuschenboden ist auch für die Fälle verwendbar, wo in dem Armaturengehäuse schon ein Dichtsystem vorhanden ist. In diesem Fall wird einfach die Hülse (8) entfernt.

## Beschreibung

Die Erfindung betrifft einen Kartuschenboden für eine Ventilkartusche.

Bei Sanitärarmaturen hat sich die Verwendung von Kartuschen für die eigentliche Ventileinrichtung durchgesetzt. In den Armaturengehäusen sind Leitungen für das zu dem Ventil gelangende Wasser und die Leitungen für das zu dem Auslauf führende Wasser vorhanden. Die Kartuschen werden in das Armaturengehäuse eingesetzt und stellen beim Einsetzen mit Hilfe ihres Bodens durch übereinstimmende Öffnungen die Verbindungen mit den Leitungen der Armaturengehäuse her.

Die Kartuschen müssen beim Einsetzen in das Armaturengehäuse diesem gegenüber abgedichtet werden. Hierzu ist es bekannt, die Dichtung zwischen der Kartusche und der Armatur in eine Nut im Kartuschenboden einzulegen. Dann muss die Fläche im Armaturengehäuse, auf der die Kartusche mit ihrer Dichtung aufliegt, plan ausgestaltet sein.

Es gibt aber auch Konstruktionen von Armaturengehäusen, bei denen besondere Dichtsysteme in der Armatur angeordnet sind, beispielsweise hydraulisch vorgespannte Dichtsysteme. In diesen Fällen muss die Kartusche einen dazu komplementären ebenen Boden aufweisen.

Durch diese beiden unterschiedlichen Dichtsysteme wird der Vorteil der Verwendbarkeit von Kartuschen für unterschiedliche Armaturen eigentlich wieder aufgehoben.

Der Erfindung liegt die Aufgabe zu Grunde, eine Möglichkeit zu schaffen, wie eine Kartusche auch für diese beiden unterschiedlichen Anwendungssysteme verwendet werden kann.

Zur Lösung dieser Aufgabe schlägt die Erfindung einen Kartuschenboden mit den im Anspruch 1 genannten Merkmalen bzw. eine Kartusche mit einem solchen Kartuschenboden vor. Weiterbildungen der Erfindung sind Gegenstand von Unteransprüchen.

Mit Hilfe der Hülse, die in den Kartuschenboden eingesetzt werden kann, lässt sich praktisch eine Nut simulieren, in die dann eine Dichtung eingelegt werden kann. In den Fällen, in denen das Armaturengehäuse ein Dichtsystem enthält, kann die Hülse entnommen werden, so dass dann der Kartuschenboden eben ist, was für eine in Gehäuse vorhandene Dichtung erforderlich ist. Mit einem einzigen Kartuschenboden können also beide unterschiedlichen Dichtsysteme verwendet werden, so dass die Vielseitigkeit der Anwendung von Kartuschen weiter verstärkt wird.

Die Hülse muss im Kartuschenboden nur während des Einbaus der Kartusche in die Armatur festliegen. Zu ihrer Befestigung kann vorgesehen sein, dass sie kraftschlüssig festgelegt wird, was durch entsprechende Dimensionierung des Innenumfangs der Öffnung und des Außenumfangs der Hülse geschehen kann.

Es ist aber ebenfalls möglich und liegt im Rahmen der Erfindung, dass die Hülse formschlüssig festgelegt wird.

Um sicherzustellen, dass die hydraulischen Eigenschaften des in dem Kartuschengehäuse angeordneten Ventilsystems nicht geändert werden, kann erfindungsgemäß die Öffnung in der Außenfläche des Kartuschenbodens verbreitert sein, so dass nach Einsetzen der Hülse keine Verringerung des Strömungsquerschnitts oder nur eine geringfügige Verringerung des Strömungsquerschnitts auftritt.

Beispielsweise kann die Öffnung in ihren Seitenwänden einen Hinterschnitt zum Eingreifen von Rastelementen der Hülse aufweisen. Dann lässt sich die Hülse einschnappen.

Es ist aber ebenfalls möglich, dass die Öffnung in ihren Seitenwänden Rastelemente zum Eingreifen in Hinterschnitte der Außenseite der Hülse aufweist.

Erfindungsgemäß kann in Weiterbildung vorgesehen sein, dass die Außenfläche des Kartuschenbodens außerhalb der Öffnung bzw. bei mehreren Öffnungen außerhalb dieser Öffnungen glattflächig ist.

Die Außenfläche desjenigen Teils der Hülse, der bei montierter Hülse aus dem Kartuschenboden heraus ragt, ist in Weiterbildung der Erfindung vorzugsweise glatt. An dieser Fläche liegen bei entsprechender Anordnung die Dichtungen an.

Die Erfindung schlägt ebenfalls eine Kombination aus einem Kartuschenboden, so wie er hierin beschrieben wurde, und einem Armaturengehäuse vor, bei dem eine Wasseraustrittsöffnung in dem Armaturengehäuse von einer Verbreiterung umgeben ist, die dann zur Einlage einer Dichtung dienen kann.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: einen abgebrochenen Schnitt durch einen auf einem Teil eines Armaturengehäuses aufsitzenden Kartuschenboden;
- Figur 2: eine der Figur 1 entsprechende Darstellung bei einer anderen Dichtungsart;
- Figur 3: eine gegenüber der Figur 1 geänderte Ausführungsform;
- Figur 4: eine nochmals geänderte Ausführungsform.

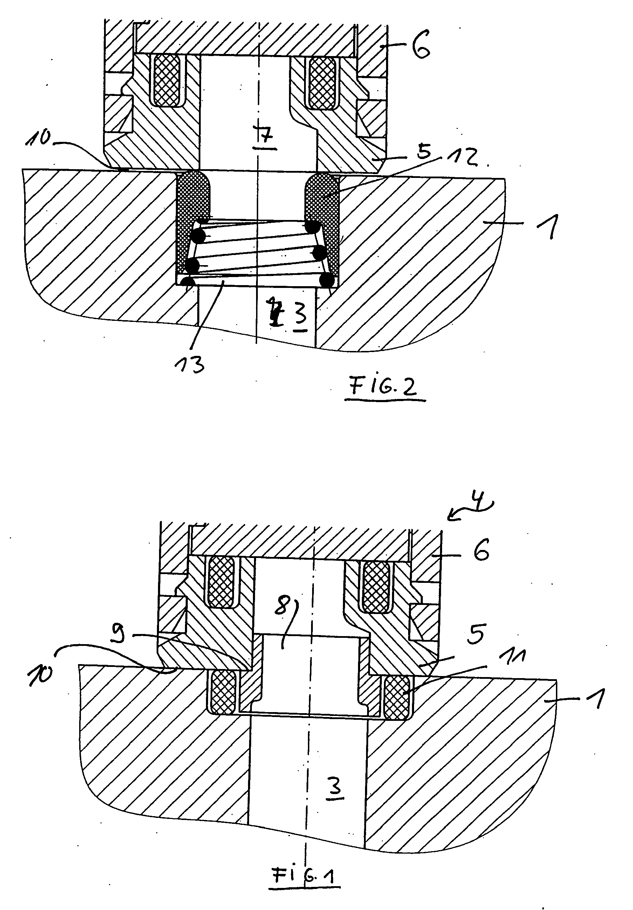

Figur 1 zeigt stark vereinfacht einen Teil eines Armaturengehäuses 1 mit einer ebenen Fläche 2. In dieser ebenen Fläche mündet eine Wasserführung 3, die mit einer Ventilkartusche 4 in Verbindung gebracht werden soll. Die Ventilkartusche 4 enthält an dem der Armatur 1 zugewandten Ende einen Kartuschenboden 5, der in das Gehäuse 6 der Ventilkartusche eingeschnappt wird. Dieser Kartuschenboden 5 enthält ebenfalls eine Öffnung 7, in die das aus der Wasseraustrittsöffnung der Wasserführung 3 austretende Wasser gelangen soll.

Die Öffnung 7 ist in ihrem Endbereich auf der einen Seite verbreitert. In die Öffnung 7 ist eine Hülse 8 eingesteckt, die im Kartuschenboden 5 durch Spannung festgehalten wird. Die Tiefe des Einschiebens wird durch eine äußere Schulter 9 begrenzt. Die Hülse 8 weist einen Teil auf, der über die Außenseite 10 des Kartuschenbodens 5 hinaus ragt. Dieser Teil greift in die Verbreiterung des Endbereichs der Wasserführung 3 ein. Er weist in radialer Richtung einen Abstand von dem Rand dieser Verbreiterung auf. Dadurch wird praktisch eine Art Nut gebildet, die die Wasserführung 3 in ihrem Endbereich umgibt. In diese Nut ist ein Dichtring 11 eingelegt, der die Abdichtung zwischen dem Kartuschenboden 5 und dem Armaturengehäuse 1 übernimmt.

Während bei den bekannten bisherigen Kartuschenböden eine solche Nut in der Endfläche des Kartuschenbodens, also der Außenseite des Kartuschenbodens, angeordnet ist, ist jetzt eine solche Nut für eine Dichtung durch die Hülse 8 und das Armaturengehäuse 1 simuliert. Es ist nicht erforderlich, dass eine tatsächliche Nut im Armaturengehäuse hergestellt wird, was einen aufwändigen Herstellungsprozess darstellen würde.

Nun zu Figur 2. In Figur 2 ist im Endbereich der Wasserführung 3 des Armaturengehäuses 1 eine Dichtung 12 eingesetzt, die durch eine Feder 13 gegen den Kartuschenboden 5 angepresst wird. Für ein solches Dichtsystem ist ein ebener glattflächiger Kartuschenboden 5 erforderlich. Auch dies kann mit dem von der Erfindung vorgeschlagenen Kartuschenboden erreicht werden, indem man einfach die Hülse 8 entfernt.

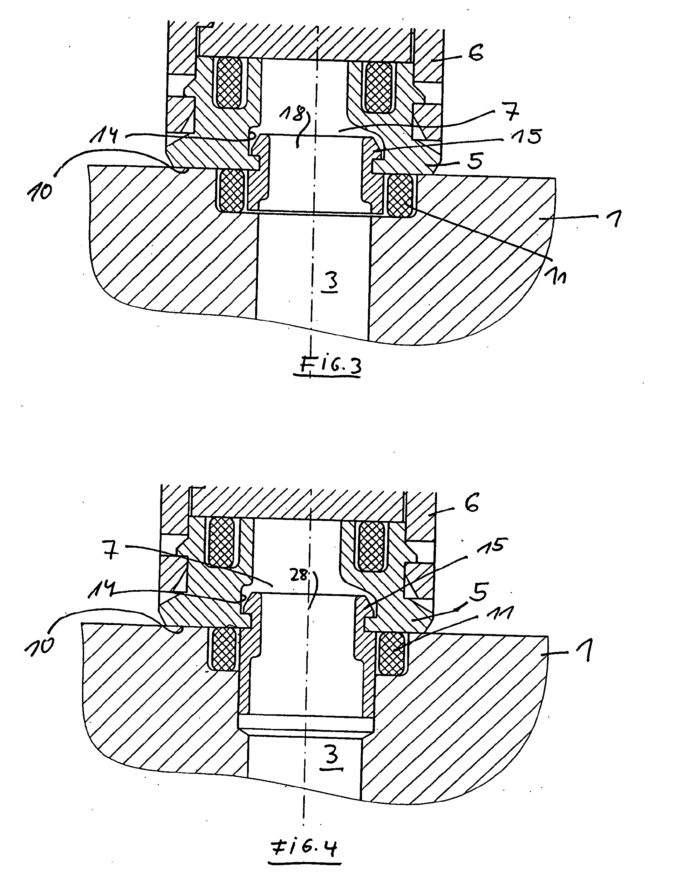

Bei der Ausführungsform nach Figur 3 weist die Öffnung 7 des Kartuschenbodens in dem verbreiterten Endbereich einen Hinterschnitt 14 auf, in den Rastvorsprünge 15 der Hülse 18 eingreifen. Dadurch lässt sich die Hülse 18 in den Kartuschenboden 5 einschnappen, was auf Grund der Verwendung von elastischen Material durchaus möglich ist.

Das Zusammenwirken des aus dem Kartuschenboden 5 herausragenden Teils der Hülse 18 mit der Armatur 1 ist hier genauso wie bei der Ausführungsform nach Figur 1.

Figur 4 zeigt eine der Figur 3 ähnliche Möglichkeit, bei der diesmal die Hülse 28 etwas länger ausgebildet ist, so dass sie weiter in das Armaturengehäuse 1 hinein reicht. Sie erstreckt sich insbesondere weiter in das Armaturengehäuse 1 hinein, als es der Tiefe der zwischen ihrer radialen Außenseite und der Verbreiterung gebildeten Nut entspricht.

## Patentansprüche

1. Kartuschenboden für eine Ventilkartusche einer Sanitärarmatur, mit
1.1 einer Festlegeeinrichtung zum Festlegen des Kartuschenbodens (5) am Kartuschengehäuse (6),
1.2 mindestens einer in das Innere des Kartuschengehäuses (6) führenden Öffnung (7), sowie mit
1.3 einer Aufnahme für eine Hülse (8, 18, 28), die
1. 3.1 in die Öffnung (7) des Kartuschenbodens (5) von dessen Außenseite her einsetzbar ist,
1.3.2 über die Außenseite (10) des Kartuschenbodens (5) hinaus ragt und
1.3.3 in dem Kartuschenboden (5) mindestens vorübergehend festlegbar ist.

2. Kartuschenboden nach Anspruch 1, bei dem der äußere Endbereich der Öffnung (7) als Aufnahme ausgebildet ist.

3. Kartuschenboden nach Anspruch 1 oder 2, bei dem die Festlegung der Hülse (8, 18, 28) in Kartuschenboden (5) kraftschlüssig erfolgt.

4. Kartuschenboden nach einem der vorhergehenden Ansprüche, bei dem die Öffnung (7) in der Außenfläche (10) des Kartuschenbodens (5) verbreitert ist.

5. Kartuschenboden nach einem der vorhergehenden Ansprüche, bei dem die Außenfläche (10) des Kartuschenbodens (5) außerhalb der Öffnung (7) bzw. der Öffnungen glattflächig ist.

6. Kartuschenboden nach einem der vorhergehenden Ansprüche, bei dem die Öffnung (7) im Kartuschenboden (5) in ihren Seitenwänden einen Hinterschnitt (14) zum Eingreifen von Rastelementen (15) der Hülse (18, 28) aufweist.

7. Kartuschenboden nach einem der vorhergehenden Ansprüche, bei dem die Öffnung (7) des Kartuschenbodens (5) in ihren Seitenwänden Rastelemente zum Eingreifen in Hinterschnitte der Hülse (8, 18, 28) aufweist.

8. Kartuschenboden nach einem der vorhergehenden Ansprüche, bei der die Außenseite des aus dem Kartuschenboden (5) herausragenden Teils der Hülse (8, 18, 28) glattflächig ist.

9. Kombination aus Kartuschenboden (5) nach einem der vorhergehenden Ansprüche und einem Armaturengehäuse (1) mit einer eine Wasseraustrittsöffnung umgebenden eine Schulter aufweisenden Verbreiterung.
